# EUROPÄISCHE PATENTSCHRIFT

(11) **EP 3 649 305 B1**
(45) Veröffentlichungstag und Bekanntmachung des Hinweises auf die Patenterteilung: **14.12.2022**
(21) Anmeldenummer: 18737911.0
(22) Anmeldetag: 06.07.2018
(51) Int. Cl.: E04G 9/00, B28B 7/00, E04G 11/06, F03D 13/20, F03D 13/10

(54) **VERFAHREN ZUR HERSTELLUNG EINER BETONSCHALUNG FÜR EIN BAUTEIL UND VERWENDUNG EINER BETONSCHALUNG**
METHOD FOR PRODUCING A CONCRETE FORMWORK FOR A STRUCTURAL ELEMENT AND USE OF A CONCRETE FORMWORK
PROCÉDÉ POUR PRODUIRE UN COFFRAGE À BÉTON POUR UN ÉLÉMENT DE CONSTRUCTION ET UTILISATION D'UN COFFRAGE EN BÉTON

(30) Priorität: 06.07.2017 DE 102017115141
(43) Veröffentlichungstag der Anmeldung: 13.05.2020
(73) Patentinhaber: Wobben Properties GmbH, 26607 Aurich (DE)
(72) Erfinder: MEYER, Ingo, 26639 Wiesmoor (DE); ALBERS, Karsten, 26759 Hinte (DE)
(74) Vertreter: Eisenführ Speiser
(86) Internationale Anmeldenummer: PCT/EP2018/068359
(87) Internationale Veröffentlichungsnummer: WO 2019/008135

(56) Entgegenhaltungen:
- WO-A1-2005/077627
- DE-A1- 2 329 243
- DE-A1-102004 045 052
- DE-U1- 29 906 967

## Beschreibung

Die Erfindung betrifft ein Verfahren zur Herstellung einer Betonschalung für ein Bauteil, insbesondere ein Turmsegment für einen Turm, vorzugsweise einen Turm einer Windenergieanlage, ein Verfahren zur Herstellung von mindestens zwei unterschiedlichen Betonschalungen für mindestens zwei unterschiedliche Bauteile, insbesondere mindestens zwei unterschiedliche Turmsegmente für einen Turm, vorzugsweise einen Turm einer Windenergieanlage, ein Verfahren zur Herstellung eines Bauteils, insbesondere eines Turmsegment für einen Turm, vorzugsweise einen Turm einer Windenergieanlage, und die Verwendung einer Betonschalung zur Herstellung eines Bauteils, nämlich eines Turmsegments für einen Turm einer Windenergieanlage.

Bauteile, wie insbesondere Turmsegmente für einen Turm einer Windenergieanlage, werden häufig aus Beton, insbesondere Stahlbeton und/oder Spannbeton, hergestellt. Zur Herstellung solcher Bauteile wird in der Regel eine Schalung verwendet, die dazu dient, flüssigem oder fließfähigem Beton (auch als Frischbeton bezeichnet) seine Form zu geben. Die Schalung wird in der Regel (sofern es sich nicht um eine verlorene Schalung handelt) nach dem Aushärten oder Erhärten des Betons entfernt. Da die Schalung das herzustellende Bauteil in der Regel umgibt, sind die Abmessungen einer Schalung teilweise sehr groß. Der Transport von Schalungen ist daher häufig sehr aufwendig, insbesondere wenn Schalungen für große Sonderbauteile zu transportieren sind. Da die Schalung dem aus Beton herzustellenden Bauteil seine Form gibt, ist eine entsprechende Präzision bei der Aufstellung der Schalung, die oft aus mehreren Einzelteilen besteht, erforderlich. Bei unpräziser Schalung können die damit hergestellten Bauteile nicht oder nur eingeschränkt verwendbar sein und/oder es können umfangreiche Nachbehandlungen erforderlich werden. Für große Sonderbauteile werden oft auch spezielle Schalungskonstruktionen angefertigt, beispielsweise als Stahlbaukonstruktionen. Während sich diese oft durch eine hohe Präzision auszeichnen, sind diese jedoch meist teuer und/oder aufwendig zu transportieren und/oder wenig flexibel in dem Sinne, dass sie nur zur Herstellung eines bestimmten Bauteils geeignet sind und nicht für in ihrer Geometrie abweichende Bauteile verwendet werden können.

Ferner ist die Beschaffungszeit für spezielle Schalungskonstruktionen oft sehr hoch und stellt damit einen restriktiven Faktor in der Produktion großer Mengen an Bauteilen dar.

Das Deutsche Patent- und Markenamt hat in der Prioritätsanmeldung zu vorliegender Anmeldung folgenden Stand der Technik recherchiert: DE 23 29 243 A1, DE 42 42 584 A1 und DE 10 2010 003 931 A1. Die DE 10 2004 045 052 A1 offenbart ein Verfahren zur Herstellung von Gebäuden, bei dem eine Vielzahl von untereinander zumindest im Wesentlichen identischen flächigen dünnen Betonbauteilen bei oder nahe dem zu erstellenden Gebäude sohlgeschalt werden mittels zumindest einer Sohlschalung mit einer Warmfluidbeheizung. Die WO 2005/077627 A1 offenbart ein Verfahren zum Herstellen eines Formteils aus Beton und/oder Mörtel mit einem zumindest bereichsweisen Oberflächenschutz. Die DE 23 29 243 offenbart ein Verfahren und eine Vorrichtung zum Herstellen von Fertigteilen aus Beton.

Es ist daher eine Aufgabe der vorliegenden Erfindung, Lösungen bereitzustellen, welche einen oder mehrere der genannten Nachteile verringern oder beseitigen. Insbesondere ist es eine Aufgabe der vorliegenden Erfindung, Lösungen bereitzustellen, welche gegenüber existierenden Lösungen verbessert und/oder vereinfacht sind. Ferner ist es eine Aufgabe der vorliegenden Erfindung, ein Verfahren zur Herstellung einer Betonschalung für ein Bauteil, insbesondere ein Turmsegment für einen Turm, vorzugsweise einen Turm einer Windenergieanlage, ein Verfahren zur Herstellung von mindestens zwei unterschiedlichen Betonschalungen für mindestens zwei unterschiedliche Bauteile, insbesondere mindestens zwei unterschiedliche Turmsegmente für einen Turm, vorzugsweise einen Turm einer Windenergieanlage, ein Verfahren zur Herstellung eines Bauteils, insbesondere eines Turmsegment für einen Turm, vorzugsweise einen Turm einer Windenergieanlage, und eine Verwendung einer Betonschalung zur Herstellung eines Bauteils, nämlich eines Turmsegments für einen Turm einer Windenergieanlage bereitzustellen, welche einen oder mehrere der genannten Nachteile verringern oder beseitigen, insbesondere verbessert und/oder oder vereinfacht und/oder kostengünstiger sind.

Diese Aufgabe wird gemäß einem ein Aspekt der Erfindung gelöst durch ein Verfahren zur Herstellung einer Betonschalung für ein Bauteil, insbesondere ein Turmsegment für einen Turm, vorzugsweise einen Turm einer Windenergieanlage gemäß Anspruch 1. Das erfindungsgemäße Verfahren sieht vor, dass eine Betonschalung für das schlussendlich herzustellende Bauteil hergestellt wird. Die Schalung für das Bauteil wird somit vor dem Herstellungsprozess dieses Bauteils produziert, indem eine Betonschalung für das Bauteil hergestellt wird. Hierzu wird zunächst ein Muster des schlussendlich herzustellenden Bauteils benötigt. Um das Muster wird in einem Abstand eine Herstellungsschalung errichtet. Zwischen dem Muster und der Herstellungsschalung entsteht so ein Hohlraum. Insbesondere ist dieser Hohlraum an mindestens einer Seite von dem Muster des Bauteils begrenzt und an mindestens einer anderen Seite von der Herstellungsschalung. Der Hohlraum wird mit flüssigem Beton verfüllt, der ausgehärtet wird. Der im Hohlraum ausgehärtete Beton stellt die Betonschalung dar, mit der Bauteile in der Form des Musters hergestellt werden können.

Die Erfindung beruht unter anderem auf der Kenntnis, dass auf diese Weise als Herstellungsschalung eine herkömmliche Schalung zum Einsatz kommen kann, insbesondere eine einfach und/oder kostengünstig aufzubauende und/oder zu transportierende Schalung. An die Herstellungsschalung sind keine besonderen Präzisionsanforderungen zu stellen, da die Herstellungsschalung nur für die Form einer Rückseite der Betonschalung relevant ist, die abgewandt ist von dem mit der Betonschalung herzustellenden Bauteil. Die Seite der Betonschalung, welche für die Form des mit der Betonschalung herzustellenden Bauteils relevant ist, wird beim Herstellen der Betonschalung durch das Muster des Bauteils definiert.

Es ist daher vorteilhaft, ein Muster mit hoher Maßhaltigkeit zu verwenden. Beispielsweise kann das Muster an einem anderen Ort hergestellt werden als dem Ort, an dem die Betonschalung hergestellt wird. Das Muster für ein Bauteil kann einfacher und/oder leichter und/oder kostengünstiger zu transportieren sein als eine Schalung zur Herstellung des Bauteils. Das erfindungsgemäße Verfahren ermöglicht es somit beispielsweise, dass Muster in hoher Präzision herzustellen und zu dem Ort zu transportieren, an dem die Bauteile und/oder die Betonschalung hergestellt werden sollen. Eine Herstellungsschalung zur Herstellung der Betonschalung kann aufgrund der an die Herstellungsschalung zu stellenden geringen Anforderungen vor Ort leicht und kostengünstig erstellt und aufgebaut werden. Für die Maßhaltigkeit des herzustellenden Bauteils ist insbesondere die Maßhaltigkeit des Musters relevant.

Die Herstellungsschalung dient somit nur der Herstellung der Betonschalung, nicht jedoch direkt der Herstellung des Bauteils. Das Bauteil wird, wie später auch noch beschrieben, durch Verwendung der Betonschalung hergestellt. Mit der Betonschalung lassen sich beliebig viele Bauteile herstellen. Ebenso lassen sich mit dem Muster und der Herstellungsschalung wiederum beliebig viele Betonschalungen herstellen.

Mit dem hier beschriebenen Verfahren ergeben sich verschiedene Vorteile. Die Erfindung wird insbesondere eingesetzt für besonders große Bauteile mit hoher Maßgenauigkeit, wie beispielsweise Turmsegmente für einen Turm, insbesondere einen Turm einer Windenergieanlage. Unter besonders großen Bauteilen werden hier insbesondere verstanden Bauteile mit einem Endgewicht von über 10to, insbesondere über 25to, beispielsweise über 30to oder über 50to. Unter besonders großen Bauteilen werden hier insbesondere auch verstanden ringförmige oder ringsegmentförmige Bauteile mit einem Radius von mind. 1m, vorzugsweise mind. 1,5m, insbesondere mind. 2m und/oder ringsegmentförmige Bauteile mit einem Radius von mind. 2m, vorzugsweise mind. 3m, insbesondere mind. 4m oder mind. 5m.

Für solche besonders großen Bauteile mit hoher Maßgenauigkeit, wie beispielsweise Turmsegmente für einen Turm, insbesondere einen Turm einer Windenergieanlage, ist eine entsprechend hohe Maßgenauigkeit der Schalung erforderlich, die herkömmliche Schalungen nicht leisten können. Aus einzelnen Schalelementen vor Ort aufgebaute Schalungen liefern weniger gut reproduzierbare Ergebnisse. Schalungen aus ausgehärtetem Schaumstoff oder ähnlichem bieten für besonders große Bauteile, wie beispielsweise Turmsegmente für einen Turm, insbesondere einen Turm einer Windenergieanlage, keine ausreichend hohe Maßgenauigkeit, insbesondere auch nicht während des Betonniervorgangs des herzustellenden Bauteils. Bei besonders großen Bauteilen, insbesondere großen ringförmigen oder ringsegmentförmigen Bauteilen, treten während des Betonnierens und Aushärtens des Betons hohe Kräfte auf die Schalung auf, die bei Schalungen aus ausgehärtetem Schaumstoff oder ähnlichem beispielsweise zu Verformungen führen können. Die Erfindung beruht unter anderem auf der Erkenntnis, dass hierfür eine Betonschalung und das hierin beschriebene Verfahren vorteilhaft ist.

Wenn in dieser Beschreibung davon die Rede ist, dass die Herstellungsschalung das Muster in einem Abstand umgibt, so ist hiermit insbesondere gemeint, dass sich die Herstellungsschalung beabstandet von einer oder mehrerer Seiten des Musters befindet. Insbesondere kann es bevorzugt sein, dass die Herstellungsschalung das Muster nicht vollständig, d.h. von allen Seiten, umgibt. Beispielsweise können sowohl das Muster als auch die Herstellungsschalung auf einem Untergrund angeordnet sein. Dieser Untergrund kann beispielsweise ein Schaltisch sein und als Teil der Herstellungsschalung angesehen werden, der Untergrund kann jedoch auch ein anderer sein und beispielsweise kein Teil der Herstellungsschalung bilden. Der zwischen die Muster und der Herstellungsschalung gebildete Hohlraum ist somit zumindest an einer Seite durch das Muster und zumindest einer anderen Seite durch die Herstellungsschalung begrenzt. Weitere Seiten des Hohlraums können durch andere Elemente begrenzt sein oder auch offen sein. Insbesondere ist es bevorzugt, dass eine nach oben gerichtete Seite des Hohlraums zumindest abschnittsweise offen ist, wobei vorzugsweise flüssiger Beton durch diese offene Seite des Hohlraums in den Hohlraum eingebracht werden kann.

Die Herstellungsschalung kann vorzugsweise das Muster insbesondere in vertikaler Richtung überragen. Ferner vorzugsweise kann auch das Muster das damit herzustellende Bauteil in vertikaler Richtung überragen und/oder auf dem Muster ein Verlängerungselement und/oder ein Teil der Herstellungsschalung angeordnet sein. Dies dient insbesondere dazu, dass beim Herstellen der Betonschalung der Hohlraum nach oben hin nicht vollständig mit flüssigem Beton ausgefüllt werden muss, sondern ein Überstand der Begrenzung über den Füllstand des Betons realisiert ist.

Ferner ist es insbesondere bevorzugt, eine Betonschalung zu erzeugen, die in vertikaler Richtung das mit der Betonschalung zu erzeugende Bauteil überragt. Dies hat den Vorteil, dass beim Herstellen eines Bauteils mittels der Betonschalung der Hohlraum nicht nach oben hin nicht vollständig mit flüssigem Beton ausgefüllt werden muss, sondern ein Überstand der Betonschalung über den Füllstand des Betons realisiert ist.

Für ein beispielsweise kreisringförmiges Bauteil wird vorzugsweise auch ein entsprechendes kreisringförmiges Muster verwendet zur Herstellung einer kreisringförmigen Betonschalung. Die Betonschalung kann vorzugsweise einen kreisringförmigen Innenabschnitt und einen kreisringförmigen Außenabschnitt aufweisen, also zwei voneinander beabstandete Kreisringe umfassen. Bei der Herstellung der Betonschalung wären diese beiden Kreisringe durch das Muster voneinander beabstandet. Bei der Herstellung eines Bauteils mittels der Betonschalung wird vorzugsweise der Hohlraum zwischen den beiden Kreisringen mit flüssigem Beton verfüllt, der später, nach dem Aushärten, das Bauteil bilden soll.

Für ein Bauteil mit der Form eines Kreisringsegments beispielsweise wird vorzugsweise auch ein entsprechendes Muster in Form eines Kreisringsegments verwendet zur Herstellung einer Betonschalung in Form eines Kreisringsegments. Diese Betonschalung umfasst vorzugsweise einen Innenabschnitt in Form eines Kreisringsegments und einen Außenabschnitt in Form eines Kreisringsegments, zwischen denen sich bei der Herstellung der Betonschalung das Muster befindet und entsprechend bei der Herstellung eines Bauteils mittels der Betonschalung in den Hohlraum zwischen den beiden Kreisringsegmenten der flüssige Beton eingebracht wird, der später, nach dem Aushärten, das Bauteil bilden soll. Vorzugsweise sind die Stirnflächen des Hohlraums zwischen dem Muster und der Herstellungsschalung in Umfangsrichtung begrenzt, sodass bei der Herstellung der Betonschalung der flüssige Beton nicht durch die Stirnflächen in Umfangsrichtung austreten kann. Die Begrenzungen der Stirnflächen in Umfangsrichtung können Teil der Herstellungsschalung sein. Beispielsweise kann die Herstellungsschalung so angeordnet sein, dass sie auch in einem Abstand zu den Stirnflächen in Umfangsrichtung des Musters verläuft, so dass auch die Betonschalung entsprechende Stirnflächen in Umfangsrichtung aufweist, die insbesondere den Innenabschnitt und den Außenabschnitt der Betonschalung verbinden können.

Ferner vorzugsweise sind bei der späteren Herstellung des Bauteils auch die Stirnflächen in Umfangsrichtung des Hohlraums zwischen dem Innenabschnitt und dem Außenabschnitt der Betonschalung begrenzt, sodass auch bei der Herstellung des Bauteils der flüssige Beton nicht durch die Stirnflächen Umfangsrichtung austreten kann. Wie zuvor beschrieben, kann dies vorzugsweise dadurch realisiert sein, dass die Betonschalung Stirnflächen in Umfangsrichtung aufweist.

Wenn in dieser Beschreibung von einem Muster und/oder einem Bauteil und/oder einer Betonschalung die Rede ist, sind hiermit insbesondere ein erstes Muster und/oder ein erstes Bauteil und/oder eine erste Betonschalung gemeint. Als Bauteil wird hier insbesondere ein Turmsegment für einen Turm, vorzugsweise einen Turm einer Windenergieanlage verstanden. Ein Turmsegment kann ein ringförmiger Abschnitt eines Turms, insbesondere eines Turms einer Windenergieanlage sein. Ein Turmsegment kann jedoch auch die Form lediglich eines Kreisringsegments aufweisen, sodass ein ringförmiger Abschnitt eines Turms aus mehreren Turmsegmenten aufgebaut sein kann. Ein Bauteil oder Turmsegment kann auch platten- oder quaderförmig ausgebildet sein. Die hier beschriebenen Verfahren, Merkmale und Aspekte lassen sich ebenso auf platten- oder quaderförmige Bauteile oder Turmsegmente anwenden. Begriffe wie Umfangsrichtung oder Radius sind dann entsprechend einer platten- oder quaderförmigen Ausbildung des Bauteils oder Turmsegments auszulegen, beispielsweise hinsichtlich der Dicke oder Längserstreckung des Bauteils oder Turmsegments.

Wenn in dieser Beschreibung von flüssigem Beton die Rede ist, ist hiermit insbesondere flüssiger oder fließfähiger Frischbeton gemeint, insbesondere flüssiger oder fließfähiger Frischbeton der Güte, die zur Herstellung der Betonschalung und/oder des Bauteils erforderlich und/oder gewünscht ist. Insbesondere können sich die Anforderungen an die Eigenschaften des Betons zur Herstellung der Betonschalung einerseits und des Bauteils andererseits unterscheiden, so dass Beton unterschiedlicher Güte und/oder mit unterschiedlichen Eigenschaften für die Betonschalung und das Bauteil zum Einsatz kommen.

Vorzugsweise ist das Verfahren zur Herstellung einer Betonschalung für ein Bauteil ferner gekennzeichnet durch ein Entfernen der Herstellungsschalung. Die Herstellungsschalung kann vorzugsweise nach dem Aushärten des Betons der Betonschalung von der Betonschalung entfernt werden. Dies kann beispielsweise durch einen Transport und/oder eine Demontage der Herstellungsschalung und/oder einen Transport der ausgehärteten Betonschalung erfolgen.

Vorzugsweise ist das Verfahren zur Herstellung einer Betonschalung für ein Bauteil ferner gekennzeichnet durch ein Entfernen des Musters. Vorzugweise wird nach dem Aushärten des Betons der Betonschalung das Muster entfernt. Dies kann beispielsweise durch einen Transport des Musters und/oder einen Transport der ausgehärteten Betonschalung erfolgen. Vorzugsweise kann, wie auch weiter unten beschrieben, die Betonschalung in zwei oder mehrere Teile getrennt werden. Vorzugsweise kann die Betonschalung und/oder ihre Teile bewegt werden, beispielsweise mittels Hydraulik oder per Kranhub, insbesondere um das Muster (oder ein später mit der Schalung hergestelltes Bauteil) auszuschalen.

Ferner vorzugsweise wird das Verfahren zur Herstellung einer Betonschalung für ein Bauteil fortgebildet durch: Beschichtung der bei der Herstellung der Betonschalung dem Muster zugewandten Oberflächen mit einer Antihaftbeschichtung.

Vorzugsweise werden eine der, einige der oder alle Oberflächen der Betonschalung, die bei der Herstellung der Betonschalung die Muster zugewandt sind, mit einer Antihaftbeschichtung beschichtet. Dies dient insbesondere dazu, bei einer späteren Herstellung eines Bauteils mit der Betonschalung ein Anhaften des Betons des Bauteils am Beton der Betonschalung zu verhindern oder zu verringern.

Die Beschichtung mit einer Antihaftbeschichtung kann beispielsweise nach dem Aushärten des Betons, gegebenenfalls nach dem Entfernen des Musters, erfolgen. Beispielsweise kann die Beschichtung mit einer Antihaftbeschichtung durch Aufbringen eines Beschichtungsmaterials, wie beispielsweise eines Betontrennmittels, eines Lackes insbesondere eines PU-basierten Farbstoffs, einer Folie, oder ähnlichem erfolgen. Beispiele für Betontrennmittel sind etwa wasserlösliche Schalungsöle, wasserunlösliche Schalungsöle, Schalungspasten, Schalungswachse, chemisch reagierende Trennmittel. Betontrennmittel werden in der Regel eingesetzt, um die Haftung zwischen Beton und Schalung zu reduzieren. In herkömmlichen Schalungen, die keine Betonoberflächen aufweisen, wird durch das Auftragen des Trennmittels in der Regel die Wasseraufnahmefähigkeit der Schalhaut herabgesetzt und damit ein Porenverschluss oder eine Porenreduzierung erzielt.

Die Beschichtung mit einer Antihaftbeschichtung kann auch derart realisiert sein, dass vor oder beim Einfüllen von flüssigen Beton in den Hohlraum zwischen der Herstellungsschalung und dem Muster an der dem Muster zugewandten Seite des Hohlraums ein Beschichtungsmaterial eingebracht wird, beispielsweise in Form einer Folie, einer Matte, oder ähnlichem.

Ferner vorzugsweise wird das Verfahren zur Herstellung einer Betonschalung für ein Bauteil fortgebildet durch: Beschichtung der bei der Herstellung der Betonschalung dem Muster zugewandten Oberflächen mit einer Grundierungsbeschichtung und anschließend mit einer Antihaftbeschichtung. Vorzugsweise kann ein erstes Beschichtungsmaterial, beispielsweise ein Lack, als Grundierungsbeschichtung auf einige der oder alle Oberflächen der Betonschalung, die bei der Herstellung der Betonschalung die Muster zugewandt sind, aufgetragen werden. Anschließend wird vorzugsweise ein zweites, insbesondere vom ersten verschiedenes, Beschichtungsmaterial, beispielsweise ein Betontrennmittel, Antihaftbeschichtung auf einige der oder alle Oberflächen der Betonschalung, die bei der Herstellung der Betonschalung die Muster zugewandt sind, aufgetragen werden. Dies ist insbesondere bevorzugt, um die Oberflächen derart vorzugbereiten, dass beispielsweise Betontrennmittel auf der Grundierungsbeschichtung haften, da Betontrennmittel in der Regel auf Betonoberflächen nicht gut haften.

In einer bevorzugten Ausführungsform des Verfahrens zur Herstellung einer Betonschalung für ein Bauteil ist vorgesehen, dass die Abmessungen des Musters gegenüber dem mit der Betonschalung herzustellenden Bauteil um ein Schwindmaß des Betons vergrößert sind. Während des Aushärtens verändert der flüssige Beton sein Volumen, insbesondere durch Feuchtigkeitsabgabe (Austrocknung) und durch chemische Reaktionen oder Gefügeumwandlungen. Diese Volumenverringerung wird auch als Schwinden bezeichnet, das Maß oder die Größe der Volumenverringerung als Schwindmaß. Damit mittels der Betonschalung ein Bauteil der gewünschten Abmessungen hergestellt werden kann, ist es bevorzugt, dass das Muster zur Herstellung der Betonschalung gegenüber dem mit der Betonschalung herzustellen Bauteil größer ist, beispielsweise um das Schwindmaß des Betons, vorzugsweise des Betons, der zur Herstellung des Bauteils zum Einsatz kommt. Vorzugsweise kann bei der Dimensionierung des Musters zusätzlich berücksichtigt werden, dass auch der Beton der Betonschalung beim Aushärten schwindet. Daher kann beispielsweise vorgesehen sein, dass das Muster zwar größer ist als das damit herzustellende Bauteil, jedoch verringert um einen Anteil, der durch das Schwinden der Betonschalung kompensiert wird. So ist es bevorzugt, dass die Abmessungen des Musters gegenüber dem mit der Betonschalung herzustellenden Bauteil um ein Maß vergrößert sind, die Schwindmaße des Betons sowohl der Betonschalung als auch des mit der Betonschalung herzustellenden Bauteils berücksichtigen. Die Schwindmaße des Betons sind insbesondere auch von der Bauteilgeometrie abhängig. Beispielsweise werden bei der Berücksichtigung der Schwindmaße des Betons die Wandstärke, die verwendete Betongüte, die Umgebung (z.B. Luftfeuchte, Temperatur, etc.) bei der Trocknung des Betons u.ä. berücksichtigt. Bei hochfesten Betonen kann beispielsweise ein Schwindmaß von ca. 0,3mm/m Wandstärke angesetzt werden.

Ferner ist es bevorzugt, dass das Verfahren zur Herstellung einer Betonschalung für ein Bauteil dadurch gekennzeichnet ist, dass dieses das Anordnen von Schienen an der Betonschaltung umfasst. Schienen können beispielsweise zur Anordnung einer Schleifmaschine verwendet werden, um vorzugsweise einen Oberflansch mechanisch zu bearbeiten. Insbesondere ist es bevorzugt, dass die Schienen an der Betonschalung verankert werden.

Eine bevorzugte Fortbildung des Verfahrens zur Herstellung einer Betonschalung für ein Bauteil sieht vor, dass an einer, zwei oder mehreren Stellen Einlagen angeordnet werden. Insbesondere ist es bevorzugt, dass Einlagen in Bereichen von Kanten, Ecken, Aussparungen und ähnlichen Geometrien angeordnet werden. Die Einlagen sind vorzugsweise aus einem metallischen Material, insbesondere Stahl, ausgebildet oder umfassen dieses. Die Einlagen können beispielsweise als flächiges Element, insbesondere als Blech, ausgebildet sein. Derartige Einlagen können beispielsweise das teilweise oder vollständige Abbrechen bestimmter Stellen verhindern oder zumindest verringern.

Vorzugsweise ist das Verfahren zur Herstellung einer Betonschalung für ein Bauteil ferner gekennzeichnet durch Bewehren des Hohlraums mit einer Bewehrung und/oder Einbringen von Hilfsmitteln für die Nutzung und/oder den Transport der herzustellenden Betonschalung. Vorzugsweise vor dem Verfüllen des Hohlraums mit flüssigem Beton können eine Bewehrung und/oder Hilfsmittel für die Nutzung und/oder den Transport der Betonschalung in den Hohlraum eingebracht werden. Die Bewehrung und/oder die Hilfsmittel können beispielsweise auch vorab (ganz oder teilweise) hergestellt und/oder bereitgestellt werden und die Herstellungsschalung und das Muster angrenzend an die Bewehrung und/oder die Hilfsmittel angeordnet werden, zur Schaffung des entsprechenden Hohlraums. Die Bewehrung kann beispielsweise auch als vorgeflochtener Bewehrungskorb vorgesehen sein. Die Hilfsmittel für die Nutzung und/oder den Transport der Betonschalung können beispielsweise Hebeanker, Hülsendübel oder Ähnliches umfassen. Die Hilfsmittel können beispielsweise an der Bewehrung befestigt sein.

Eine bevorzugte Weiterbildung des Verfahrens zur Herstellung einer Betonschalung für ein Bauteil zeichnet sich dadurch aus, dass die Bewehrung aus Stahl besteht oder Stahl aufweist; und/oder die Bewehrung aus textilen Strukturen besteht oder textile Strukturen aufweist; und/oder die Bewehrung aus glasfaserverstärktem Kunststoff besteht oder glasfaserverstärkten Kunststoff aufweist; und/oder die Bewehrung aus Fasergewebe, insbesondere Glasfaser- und/oder oder Kunstfasergewebe, oder Fasergewebe, insbesondere Glasfaser- und/oder oder Kunstfasergewebe, aufweist. Die textilen Strukturen und/oder das Fasergewebe können beispielsweise Kohlenstofffasern und/oder alkaliresistente Fasern umfassen oder daraus bestehen.

Gemäß einer bevorzugten Ausführungsform des Verfahrens zur Herstellung einer Betonschalung für ein Bauteil ist vorgesehen, dass die Betonschalung zwei Abschnitte umfasst, insbesondere einen Innenabschnitt und einen Außenabschnitt, die gleichzeitig oder nacheinander hergestellt werden können. Wie oben bereits dargestellt, können der Innenabschnitt und/oder der Außenabschnitt kreisringförmig ausgebildet sein oder die Form eines Kreisringsegments aufweisen. Ferner kann die Betonschalung auch mehr als zwei Abschnitte aufweisen. Beispielsweise können ein Innenabschnitt und ein Außenabschnitt in Form von Kreisringsegmenten durch Verbindungsabschnitte an den Stirnseiten Umfangsfläche verbunden sein.

Das Verfahren zur Herstellung einer Betonschalung für ein Bauteil ist gekennzeichnet durch Trennen der Betonschalung in zwei oder mehrere Teilbetonschalungen. Es kann bevorzugt sein, die Betonschalung insbesondere nach dem Aushärten des Betons in zwei oder mehrere Teilbetonschalungen zu trennen, beispielsweise um die Betonschalung leichter transportieren und/oder lagern zu können und/oder das Muster oder ein mit der Betonschalung hergestelltes Bauteil leichter ausschalen zu können. Eine Trennung der Betonschalung kann insbesondere in horizontaler Richtung und/oder vertikaler Richtung und/oder radialer Richtung und/oder Umfangsrichtung erfolgen. Vorzugsweise weist die Betonschalung zwei Trennstellen auf, die insbesondere an gegenüberliegenden Bereichen der Betonschalung verortet sein können. In Bezug auf eine kreisrund ausgebildete Betonschalung mit zwei Trennstellen sind diese vorzugsweise in einem Bereich bei 0 Bogengrad und bei 180 Bogengrad verortet. Derartige Betonschalungen können beispielsweise für Vollsegmente und/oder für Halbsegmente eingesetzt werden. Ferner kann es bevorzugt sein, drei oder mehr Trennstellen an der Betonschalung vorzusehen. In Bezug auf eine kreisrund ausgebildete Betonschalung mit drei Trennstellen sind diese vorzugsweise in einem Bereich bei 0 Bogengrad, bei 120 Bogengrad und bei 240 Bogengrad verortet.

Eine weitere bevorzugte Weiterbildung des Verfahrens zur Herstellung einer Betonschalung für ein Bauteil zeichnet sich dadurch aus, dass die Herstellungsschalung als Betonschalung und/oder Standschalung und/oder Holzschalung und/oder Trägerschalung und/oder Rahmenschalung und/oder verlorene Schalung und/oder einhäuptige Schalung und/oder zweihäuptige Schalung und/oder Freiformschalung und/oder Rundschalung ausgebildet ist; und/oder die Herstellungsschalung Abmessungen aufweist, die für den Straßentransport geeignet sind. Wie auch bereits oben erwähnt, dient die Herstellungsschalung lediglich dazu, eine dem mit der Betonschalung herzustellenden Bauteil abgewandte Seite der Betonschalung zu formen. Diese dem herzustellenden Bauteil abgewandten Seite der Betonschalung ist für die Maßhaltigkeit des Bauteils nicht relevant. Daher kann als Herstellungsschalung eine beliebige Schalung eingesetzt werden, solange sie die Herstellung der Betonschalung ermöglicht. Insbesondere kann die Art der Herstellungsschalung an die Gegebenheiten vor Ort angepasst werden hinsichtlich Verfügbarkeit und/oder Kosten.

Es ist ferner bevorzugt, dass das Muster aus Stahl besteht und/oder Stahl aufweist; und/oder das Muster aus einer Stahllegierung besteht und/oder eine Stahllegierung aufweist; und/oder das Muster Abmessungen aufweist, die für den Straßentransport geeignet sind, und/oder das Muster aus zwei oder mehreren Teilmustern zusammensetzbar ist, und die zwei oder mehreren Teilmuster jeweils Abmessungen aufweisen, die für den Straßentransport geeignet sind. Ferner kann es bevorzugt sein, dass das Muster aus Aluminium, und/oder aus einem Verbundstoff, insbesondere glasfaser- und/oder kohlenfaserverstärktem Kunststoff, besteht oder Aluminium, und/oder einen Verbundstoff, insbesondere einen glasfaser- und/oder kohlenfaserverstärkten Kunststoff, aufweist. Diese Ausgestaltungen sind bevorzugt, um eine hohe Maßhaltigkeit des Musters, insbesondere auch bei mehrfacher Verwendung zur Herstellung von Betonschalungen, sicherzustellen, und/oder um einen Transport des Musters, insbesondere auch über größere Distanzen, zu erleichtern. Da an die Maßhaltigkeit des Musters vorzugsweise hohe Anforderungen zu stellen sind, kann es bevorzugt sein, dass Muster zentral und/oder an einer dafür besonders qualifizierten Stelle zu fertigen und an den Ort zu transportieren, an dem dem Muster entsprechende Bauteile hergestellt werden sollen, wozu zunächst eine Betonschalung erstellt wird. Eine Ausbildung des Musters mit hoher Maßhaltigkeit und/oder günstigen Transportmaßen ist somit vorteilhaft. Vorzugsweise ist das Muster als hohles Element ausgebildet, ggf. mit inneren Stützstreben und/oder einer Füllung aus einem anderen, insbesondere leichten und/oder steifen, Material. Hierdurch kann das Gewicht des Musters reduziert werden.

Gemäß einem weiteren Aspekt der Erfindung wird die eingangs genannte Aufgabe gelöst durch ein Verfahren zur Herstellung von mindestens zwei unterschiedlichem Betonschalungen für mindestens zwei unterschiedliche Bauteile, insbesondere mindestens zwei unterschiedliche Turmsegmente für einen Turm, vorzugsweise einen Turm einer Windenergieanlage, das Verfahren umfassend Herstellen einer ersten Betonschalung nach dem zuvor beschriebenen Verfahren, Bereitstellen eines zweiten Musters eines zweiten Bauteils, das vom ersten verschieden ist; Errichten der zuvor für die Herstellung der ersten Betonschalung verwendeten Herstellungsschalung um das zweite Muster in einem Abstand zum zweiten Muster, wobei ein zwischen der Herstellungsschalung und dem zweiten Muster entstehender Hohlraum den Abmessungen der herzustellenden zweiten Betonschalung entspricht; Verfüllen des Hohlraums mit flüssigem Beton; Aushärten des Betons.

Gemäß diesem Aspekt der Erfindung wird zur Herstellung von Betonschalungen für unterschiedliche Bauteile, insbesondere hinsichtlich ihrer Geometrie unterschiedliche Bauteile, wie beispielsweise Turmsegmente mit unterschiedlichen Radius und/oder unterschiedlicher Verjüngung für den Einbau in verschiedenen Turmhöhen, die gleiche Herstellungsschalung verwendet. Es unterscheiden sich jedoch die für die erste und für die zweite Betonschalung verwendeten Muster und die mit der ersten und mit der zweiten Betonschalung herzustellenden Bauteile. Die Herstellungsschalung kann unverändert oder identisch zur Herstellung beider Betonschalungen verwendet werden, insbesondere wenn die Unterschiede hinsichtlich der Geometrie der beiden Muster gering sind. Es können jedoch auch Modifikationen an der Herstellungsschalung vorgenommen werden, beispielsweise kann bei einer Rundschalung ein Schalungselement mehr oder weniger verwendet werden, je nachdem, welcher Radius des Vielecks der Rundschalung erzielt werden soll. Im Übrigen kann das Verfahren zur Herstellung von Betonschalungen für unterschiedliche Bauteile gemäß den Weiterbildungen des zuvor beschriebenen Verfahrens zur Herstellung einer Betonschalung weitergebildet werden.

Gemäß einem weiteren Aspekt der Erfindung wird die eingangs genannte Aufgabe gelöst durch ein Verfahren zur Herstellung eines Bauteils, insbesondere eines Turmsegments für einen Turm, vorzugsweise einen Turm einer Windenergieanlage, das Verfahren umfassend Bereitstellen einer nach dem zuvor beschriebenen Verfahren hergestellten Betonschalung, Verfüllen eines von der Betonschalung gebildeten Hohlraums mit flüssigem Beton; Aushärten des Betons.

Das Bereitstellen einer nach den zuvor beschriebenen Verfahren hergestellten Betonschalung umfasst gegebenenfalls das Herstellen und/oder Transportieren der Betonschalung. Die mit Bezug auf das Verfahren zur Herstellung der Betonschalung beschriebenen Merkmale und Details, die auch für die Herstellung eines Bauteils relevant und/oder vorteilhaft sind, gelten ebenso mit Bezug auf das Verfahren zur Herstellung eines Bauteils.

Gemäß einer bevorzugten Ausführungsform ist vorgesehen, dass das Verfahren zur Herstellung eines Bauteils gekennzeichnet ist durch Entfernen der Betonschalung; und/oder Bewehren des Hohlraums mit einer Bewehrung; und/oder Einbringen von Führungen für Spannseile und/oder Leitungen und/oder Kabel in den Hohlraum und/oder Nachbehandeln, insbesondere Schleifen und/oder Beschichten, des Bauteils.

Die Führungen können beispielsweise als Leerrohre ausgebildet sein. Das Bewehren des Hohlraums und/oder das Einbringen von Führungen erfolgt vorzugsweise vor dem Verfüllen des Hohlraums mit flüssigem Beton. Eine Nachbehandlung des Bauteils erfolgt vorzugsweise nach dem Ausschalen des Bauteils, insbesondere nach dem Entfernen der Betonschalung.

Beschrieben wird ferner eine Betonschalung für ein Bauteil, insbesondere ein Turmsegment für einen Turm, vorzugsweise einen Turm einer Windenergieanlage, wobei die Betonschalung in einem zuvor beschriebenen Verfahren hergestellt wurde.

Die Betonschalung zeichnet sich insbesondere dadurch aus, dass diese an einer Außenumfangsfläche, die im Herstellungsprozess der Herstellungsschalung zugewandt ist, eine strukturierte Oberfläche aufweist. Die strukturierte Oberfläche kann insbesondere eine Struktur eines grobporigen Betons aufweist. Beispielsweise könnte die strukturierte Oberfläche das Negativ von Lunkern aufweisen. Insbesondere kann die Oberfläche eine zu einer Metalloberfläche verschiedene Beschaffenheit aufweisen. Ferner kann die Oberfläche Abdrücke, insbesondere vertikal verlaufende Abdrücke aufweisen, die durch den Stoß von zwei Elementen der Herstellungsschalung hervorgerufen werden können. Darüber hinaus kann die Außenumfangsgeometrie der Betonschalung eine unrunde, und/oder ovale, und/oder eckige Form aufweisen.

Beschrieben wird ferner ein Bauteil, insbesondere ein Turmsegment für einen Turm, vorzugsweise einen Turm einer Windenergieanlage, das in einem zuvor beschriebenen Verfahren und/oder unter Verwendung einer zuvor beschriebenen Betonschalung hergestellt wurde.

Das in einem zuvor beschriebenen Verfahren und/oder unter Verwendung einer zuvor beschriebenen Betonschalung hergestellte Bauteil kann sich beispielsweise durch zwei oder mehr Negativstellen von Stößen auszeichnen, wobei an den Stößen zwei Elemente der Betonschalung aneinander angeordnet sind bzw. waren.

Beschrieben wird ferner ein Muster eines Bauteils, insbesondere eines Turmsegments für einen Turm, vorzugsweise einen Turm einer Windenergieanlage, wobei die Abmessungen des Musters gegenüber dem mit der Betonschalung herzustellenden Bauteil um ein Schwindmaß des Betons vergrößert sind.

Vorzugsweise ist vorgesehen, dass das Muster aus Stahl besteht und/oder Stahl aufweist; und/oder das Muster aus einer Stahllegierung besteht und/oder eine Stahllegierung aufweist; und/oder das Muster Abmessungen aufweist, die für den Straßentransport geeignet sind, und/oder das Muster aus zwei oder mehreren Teilmustern zusammensetzbar ist, und die zwei oder mehreren Teilmuster jeweils Abmessungen aufweisen, die für den Straßentransport geeignet sind.

Beschrieben wird ferner eine Verwendung eines zuvor beschriebenen Musters zur Herstellung einer Betonschalung für ein Bauteil, insbesondere ein Turmsegment für einen Turm, vorzugsweise einen Turm einer Windenergieanlage.

Gemäß einem weiteren Aspekt der Erfindung wird die eingangs genannte Aufgabe gelöst durch eine Verwendung einer Betonschalung, nämlich einer im zuvor beschriebenen Verfahren hergestellten Betonschalung, zur Herstellung eines Bauteils, nämlich eines Turmsegments für einen Turm einer Windenergieanlage.

Zu den Vorteilen, Ausführungsvarianten und Ausführungsdetails der jeweiligen weiteren Aspekte der Erfindung und ihrer möglichen Fortbildungen wird insbesondere auch auf die vorangegangene Beschreibung zu den entsprechenden Merkmalen der übrigen Aspekte der Erfindung verwiesen.

Weitere vorteilhafte Ausführungsvarianten der erfindungsgemäßen Verfahren und der Verwendung ergeben sich durch Kombination der hier erörterten bevorzugten Merkmale, solange diese in den Schutzumfang der Erfindung fallen, die nur durch die beigefügten Ansprüche definiert wird.

Bevorzugte Ausführungsformen der Erfindung werden beispielhaft anhand der beiliegenden Figuren beschrieben. Es zeigen:
- Figur 1:: eine schematische Darstellung einer Windenergieanlage mit einem Turm mit erfindungsgemäß hergestellten Bauteilen;
- Figur 2:: eine schematische Darstellung einer beispielhaften Ausführungsform des erfindungsgemäßen Verfahrens zur Herstellung einer Betonschalung für ein Bauteil, insbesondere ein Turmsegment für einen Turm einer Windenergieanlage;
- Figur 3:: einen schematischen Querschnitt durch eine beispielhafte Ausführungsform einer Herstellungsschalung und eines Musters für ein Bauteil;
- Figur 4:: den Querschnitt nach Figur 3 mit Betonschalung;
- Figur 5:: eine Schalung gemäß dem Stand der Technik, die als Herstellungsschalung verwendet werden kann;
- Figur 6:: einen schematischen Querschnitt durch eine beispielhafte Ausführungsform einer Betonschalung;
- Figur 7:: den Querschnitt nach Figur 3 mit Bauteil.

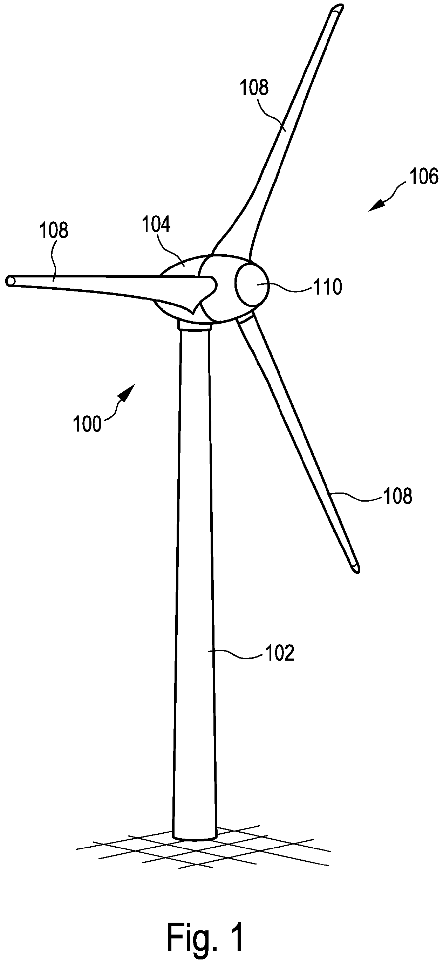

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an. Der Turm 102 weist Bauteile auf, die nach dem hier beschriebenen Verfahren hergestellt wurden.

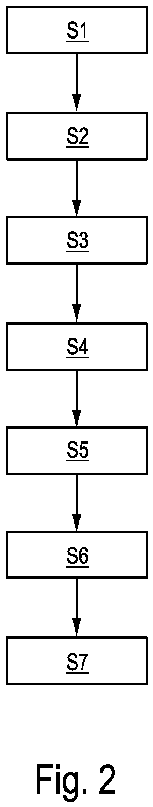

Die schematische Darstellung einer beispielhaften Ausführungsform des erfindungsgemäßen Verfahrens zur Herstellung einer Betonschalung für ein Bauteil, insbesondere ein Turmsegment für einen Turm einer Windenergieanlage gemäß Figur 2 umfasst die folgenden Schritte: S1: Bereitstellen eines Musters des Bauteils, S2: Errichten einer Herstellungsschalung um das Muster in einem Abstand zum Muster, wobei ein zwischen der Herstellungsschalung und dem Muster entstehender Hohlraum den Abmessungen der herzustellenden Betonschalung entspricht; S3: Verfüllen des Hohlraums mit flüssigem Beton; S4: Aushärten des Betons; S5: Entfernen der Herstellungsschalung; S6: Entfernen des Musters; S7: Beschichtung der bei der Herstellung der Betonschalung dem Muster zugewandten Oberflächen mit einer Antihaftbeschichtung.

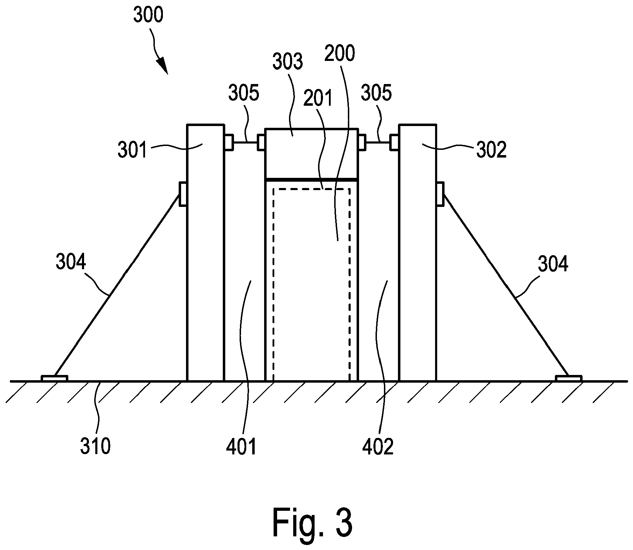

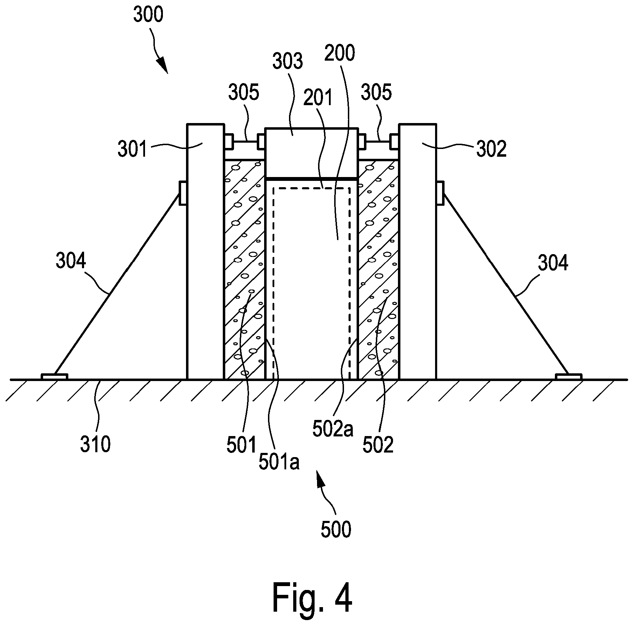

Figur 3 zeigt einen schematischen Querschnitt durch eine beispielhafte Ausführungsform einer Herstellungsschalung 300 und eines Muster 200 für ein Bauteil, Figur 4 zeigt den Querschnitt nach Figur 3 mit Betonschalung 501, 502. Gemäß Figur 3 ist ein Muster 200 eines Bauteils zu erkennen, das auf einem Untergrund oder Schaltisch 310 angeordnet ist. Mit der unterbrochenen Linie 201 ist gekennzeichnet, dass das Muster 200 um ein Schwindmaß des für das herzustellende Bauteil verwendeten Betons vergrößert ist. Die unterbrochene Linie 201 deutet schematisch die Geometrie des herzustellenden, um das Schwindmaß des Betons kleineren Bauteils dar. In Figur 3 sind rechts und links neben dem Muster 200 beabstandet Teile 301,302 der Herstellungsschalung 300 angeordnet. Zwischen dem Teil 301 der Herstellungsschalung 300 und dem Bauteil 200 ist ein Hohlraum 401 gebildet, zwischen dem Teil 302 der Herstellungsschalung 300 und dem Bauteil 201 weiterer Hohlraum 402. Auf dem Bauteil 200 ist ein weiterer Teil 303 der Herstellungsschalung 300 angeordnet. Die Teile 301,302 der Herstellungsschalung sind über Verstrebungen 304 abgestützt. Alternativ oder zusätzlich können die Teile 301, 302 auch mit dem Schaltisch 310 verbunden, insbesondere verschraubt, sein. Das Teil 303 der Herstellungsschalung 300 ist gegenüber den Teilen 301,302 der Herstellungsschalung 300 über Streben 305 abgestützt. Die Hohlräume 401,402 sind nach unten durch den Boden oder Schaltisch 310 begrenzt und nach oben hin offen, so das von oben flüssiger Beton in die Hohlräume 401,402 eingebracht werden kann. Zu den Seiten hin sind die Hohlräume 401,402 durch das Muster 200 und die Teile 301,302 der Herstellungsschalung 300 begrenzt. Auch an den in Figur 3 nicht zu erkennenden Stirnflächen sind die Hohlräume 401,402 vorzugweise begrenzt. Die Begrenzung kann durch ein weiteres (nicht dargestelltes) Schalungsteil realisiert sein.

Wie in Figur 4 zu erkennen ist, sind die Hohlräume 401,402 gemäß Figur 3 mit flüssigem Beton verfüllt worden und der Beton wurde ausgehärtet, sodass die beiden Abschnitte 501,502 der Betonschalung 500 entstanden sind. Die beiden Abschnitte 501,502 der Betonschalung 500 können auch als Innenabschnitt und Außenabschnitt bezeichnet werden, insbesondere wenn es sich bei dem herzustellenden Bauteil um ein kreisringförmiges Bauteil oder ein Bauteil mit der Form eines Kreisringsegments handelt.

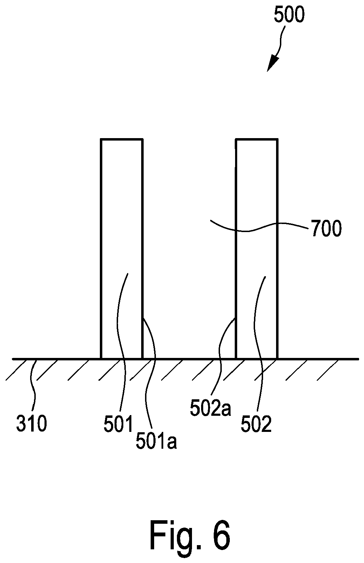

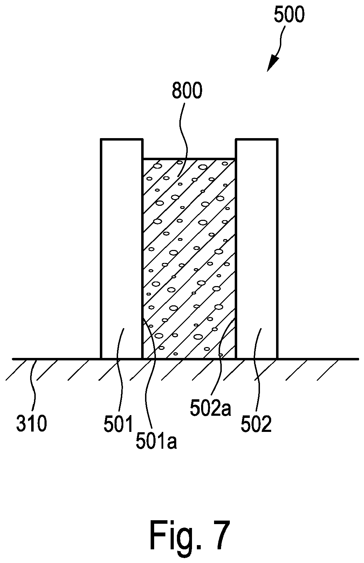

Die Oberflächen 501a, 502a sind bei der Herstellung der Betonschalung 500 dem Muster 200 zugewandt und bei der Herstellung des Bauteils 800 dem Bauteil 800 bzw. vorher dem Hohlraum 700 (siehe Figuren 6,7) zugewandt. Diese Oberflächen 501a, 502a sind vorzugweise mit einer Antihaftbeschichtung beschichtet, um ein Anhaften des Bauteils 800 an der Betonschalung 500 zu vermeiden oder zu reduzieren. Als Antihaftbeschichtung können beispielsweise Öle oder Epoxide eingesetzt werden.

Figur 6 zeigt einen schematischen Querschnitt durch eine beispielhafte Ausführungsform einer Betonschalung 501, 502, Figur 7 zeigt den Querschnitt nach Figur 3 mit Bauteil 800. Nach dem Entfernen des Musters 200 und der Herstellungsschalung 300 kann die hergestellte Betonschalung 500 auf einem Untergrund oder Schaltisch 310 zur Herstellung eines Bauteils verwendet werden. Hierzu wird der Hohlraum 700 zwischen den Abschnitten 501,502 der Betonschalung 500 mit flüssigem Beton verfüllt, der nach dem Aushärten das Bauteil 800 bildet.

Die Maßhaltigkeit des mit der Betonschalung 500 herzustellenden Bauteils 800 wird durch die bei der Herstellung der Betonschalung 500 die Muster 200 zugewandten Oberflächen 501a, 502a beeinflusst, nicht durch die der bei der Herstellung der Betonschalung 500 der Herstellungsschalung 300 zugewandten Oberflächen. Daher kann für die Herstellungsschalung 300 eine einfache Schalung verwendet werden, die geringeren Anforderungen an die Präzision entspricht. Das mit möglichst hoher Maßhaltigkeit gefertigte Muster 200 hingegen kann vorzugsweise wiederverwendet werden zur Herstellung einer beliebigen Anzahl an Betonschalungen 500 und kann vorzugsweise aufgrund der Transportmaße auch über längere Strecken transportiert werden.

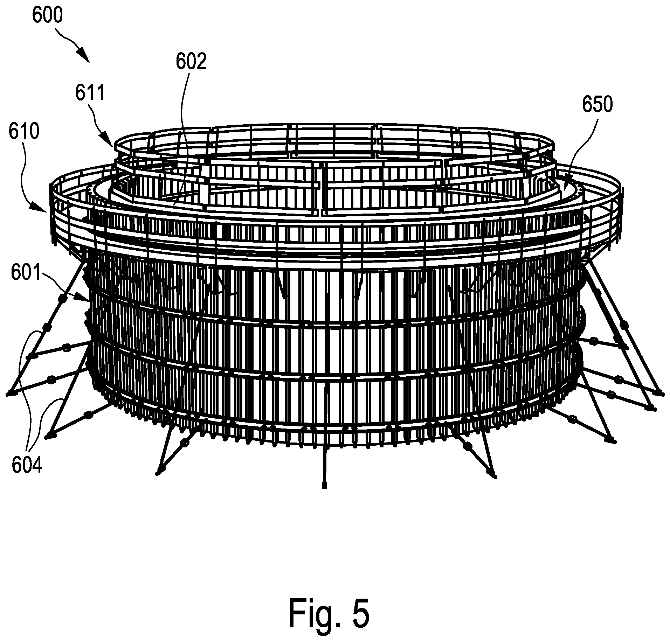

In Figur 5 ist eine Rundschalung 600 gemäß dem Stand der Technik gezeigt, die als Herstellungsschalung verwendet werden kann. Die Rundschalung 600 gemäß Figur 5 weist einen äußeren Schalungsteil 601 und einen inneren Schalungsteil 602 auf, zwischen denen ein Hohlraum 650 ausgebildet ist, der mit flüssigem Beton verfüllt werden kann, um ein ringförmiges Bauteil herzustellen. Zu erkennen sind die Stützstreben 604, mit denen der äußere Schalungsteil 601 abgestützt ist. Am oberen Ende weist das innere Schalungsteil 602 ein Geländer 611 auf. Am oberen Ende des äußeren Schalungsteils 601 ist ein umlaufender Gang 610 ebenfalls mit Geländer gebildet. Solche Rundschalungen 600 sind im Stand der Technik bekannt und flexibel einsetzbar, auch für unterschiedliche Radien. Für wechselnde Geometrien von Turmsegmenten, insbesondere bei sich verjüngenden Turmsegmenten und/oder anderen besonderen Geometrien in den Turmsegmenten sind jedoch erhebliche Anpassungen erforderlich, die mit existierenden Schalung nicht oder nur mit hohem Aufwand und einer besonderen Qualitätskontrolle hinsichtlich der Präzision realisiert werden können. Gemäß der Erfindung ist es daher auch möglich, solche flexibel einzusetzenden Schalungen wie die Rundschalung 600 als Herstellungsschalung einzusetzen, um die dem Muster - und damit dem später herzustellenden Bauteil - abgewandten Seiten der Betonschalung zu schalen. Auf diese Weise können beispielsweise auch besondere Geometrien, wie beispielsweise sich verjüngenden Bauteile, mit Betonschalungen hergestellt werden, für die die gleiche oder nur eine geringfügig modifizierte Herstellungsschalung eingesetzt wurde.

## Patentansprüche

1. Verfahren zur Herstellung einer Betonschalung (500) für ein Bauteil (800), insbesondere ein Turmsegment für einen Turm, vorzugsweise einen Turm (102) einer Windenergieanlage (100),
das Verfahren umfassend
- Bereitstellen eines Musters (200) des Bauteils;
- Errichten einer Herstellungsschalung (300) um das Muster in einem Abstand zum Muster, wobei ein zwischen der Herstellungsschalung und dem Muster entstehender Hohlraum (401, 402) den Abmessungen der herzustellenden Betonschalung (500) entspricht;
- Verfüllen des Hohlraums mit flüssigem Beton;
- Aushärten des Betons,
**gekennzeichnet durch**:
Trennen der Betonschalung (500) in zwei oder mehrere Teilbetonschalungen.

2. Verfahren zur Herstellung einer Betonschalung (500) für ein Bauteil (800) nach dem vorhergehenden Anspruch,
**gekennzeichnet durch**:
- Entfernen der Herstellungsschalung (300);
- Entfernen des Musters (200).

3. Verfahren zur Herstellung einer Betonschalung (500) für ein Bauteil (800) nach mindestens einem der vorhergehenden Ansprüche,
**gekennzeichnet durch**:
- Beschichtung der bei der Herstellung der Betonschalung (500) dem Muster zugewandten Oberflächen mit einer Antihaftbeschichtung; und/oder
- Beschichtung der bei der Herstellung der Betonschalung (500) dem Muster zugewandten Oberflächen mit einer Grundierungsbeschichtung und anschließend mit einer Antihaftbeschichtung, und/oder
- Bewehren des Hohlraums (401, 402) mit einer Bewehrung und/oder
- Einbringen von Hilfsmitteln für die Nutzung und/oder den Transport der herzustellenden Betonschalung (500).

4. Verfahren zur Herstellung einer Betonschalung (500) für ein Bauteil (800) nach mindestens einem der vorhergehenden Ansprüche,
**dadurch gekennzeichnet, dass**
- die Abmessungen des Musters (200) gegenüber dem mit der Betonschalung (500) herzustellenden Bauteil (800) um ein Schwindmaß des Betons vergrößert sind; und/oder
- die Abmessungen des Musters (200) gegenüber dem mit der Betonschalung (500) herzustellenden Bauteil (800) um ein Maß vergrößert sind, die Schwindmaße des Betons sowohl der Betonschalung (500) als auch des mit der Betonschalung herzustellenden Bauteils (800) berücksichtigen.

5. Verfahren zur Herstellung einer Betonschalung (500) für ein Bauteil nach mindestens einem der vorhergehenden Ansprüche,
**dadurch gekennzeichnet, dass**
die Betonschalung (500) zwei Abschnitte umfasst, insbesondere einen Innenabschnitt und einen Außenabschnitt, die gleichzeitig oder nacheinander hergestellt werden können.

6. Verfahren zur Herstellung einer Betonschalung (500) für ein Bauteil nach mindestens einem der vorhergehenden Ansprüche,
**dadurch gekennzeichnet, dass**
- die Herstellungsschalung (300) als Betonschalung und/oder Standschalung und/oder Holzschalung und/oder Trägerschalung und/oder Rahmenschalung und/oder verlorene Schalung und/oder einhäuptige Schalung und/oder zweihäuptige Schalung und/oder Freiformschalung und/oder Rundschalung ausgebildet ist; und/oder
- die Herstellungsschalung (300) Abmessungen aufweist, die für den Straßentransport geeignet sind.

7. Verfahren zur Herstellung von mindestens zwei unterschiedlichen Betonschalungen (500) für mindestens zwei unterschiedliche Bauteile, insbesondere mindestens zwei unterschiedliche Turmsegmente für einen Turm, vorzugsweise einen Turm (102) einer Windenergieanlage (100),
das Verfahren umfassend:
- Herstellen einer ersten Betonschalung (500) nach einem Verfahren nach mindestens einem der vorhergehenden Ansprüche,
- Bereitstellen eines zweiten Musters eines zweiten Bauteils, das vom ersten verschieden ist;
- Errichten der zuvor für die Herstellung der ersten Betonschalung (500) verwendeten Herstellungsschalung um das zweite Muster in einem Abstand zum zweiten Muster, wobei ein zwischen der Herstellungsschalung und dem zweiten Muster entstehender Hohlraum den Abmessungen der herzustellenden zweiten Betonschalung;
- Verfüllen des Hohlraums mit flüssigem Beton;
- Aushärten des Betons.

8. Verfahren zur Herstellung eines Bauteils (800), insbesondere eines Turmsegments für einen Turm, vorzugsweise einen Turm (102) einer Windenergieanlage (100), das Verfahren umfassend
- Bereitstellen einer nach dem Verfahren nach mindestens einem der vorhergehenden Ansprüche hergestellten Betonschalung (500),
- Verfüllen eines von der Betonschalung (500) gebildeten Hohlraums mit flüssigem Beton;
- Aushärten des Betons.

9. Verfahren zur Herstellung eines Bauteils (800) nach dem vorhergehenden Anspruch,
**gekennzeichnet durch**:
- Entfernen der Betonschalung (500); und/oder
- Bewehren des Hohlraums mit einer Bewehrung; und/oder
- Einbringen von Führungen für Spannseile und/oder Leitungen und/oder Kabel in den Hohlraum; und/oder
- Nachbehandeln, insbesondere Schleifen und/oder Beschichten, des Bauteils (800).

10. Verwendung einer Betonschalung (500) zur Herstellung eines Bauteils (800), nämlich eines Turmsegments für einen Turm (102) einer Windenergieanlage (100), **dadurch gekennzeichnet, dass** die Betonschalung (500) in einem Verfahren nach mindestens einem der vorhergehenden Ansprüche 1-6 hergestellt wurde.

## Claims

1. A method for producing a concrete formwork (500) for a component (800), in particular a tower segment for a tower, preferably a tower (102) of a wind turbine (100), the method comprising:
- providing a pattern (200) of the component;
- erecting a production formwork (300) around the pattern at a distance from the pattern, wherein a cavity (401, 402) produced between the production formwork and the pattern corresponds to the dimensions of the concrete formwork (500) to be produced;
- filling the cavity with liquid concrete;
- hardening the concrete.
**characterized by**:
- separating the concrete formwork (500) into two or more partial concrete formworks.

2. The method for producing a concrete formwork (500) for a component (800) as claimed in the preceding claim,
**characterized by**:
- removing the production formwork (300);
- removing the pattern (200).

3. The method for producing a concrete formwork (500) for a component (800) as claimed in at least one of the preceding claims,
**characterized by**:
- coating the surfaces facing the pattern in the production of the concrete formwork (500) with an anti-adhesion coating; and/or
- coating the surfaces facing the pattern in the production of the concrete formwork (500) with a primer coating and subsequently with an anti-adhesion coating and/or
- reinforcing the cavity (401, 402) with a reinforcement; and/or
- introducing auxiliary means for the use and/or transport of the concrete formwork (500) to be produced.

4. The method for producing a concrete formwork (500) for a component (800) as claimed in at least one of the preceding claims,
**characterized in that**
- the dimensions of the pattern (200) are increased in comparison with the component (800) to be produced with the concrete formwork (500) by a shrinkage allowance for the concrete; and/or
- the dimensions of the pattern (200) are increased in comparison with the component (800) to be produced with the concrete formwork (500) by an amount that takes into account shrinkage allowances for the concrete both of the concrete formwork (500) and of the component (800) to be produced with the concrete formwork.

5. The method for producing a concrete formwork (500) for a component as claimed in at least one of the preceding claims,
**characterized in that**
the concrete formwork (500) comprises two portions, in particular an inner portion and an outer portion, which may be produced at the same time or one after the other.

6. The method for producing a concrete formwork (500) for a component as claimed in at least one of the preceding claims,
**characterized in that**
- the production formwork (300) is formed as concrete formwork and/or fixed formwork and/or timber formwork and/or girder formwork and/or panel formwork and/or permanent formwork and/or single-face formwork and/or double-face formwork and/or freeform formwork and/or round formwork; and/or
the production formwork (300) has dimensions that are suitable for road transport.

7. A method for producing at least two different concrete formworks (500) for at least two different components, in particular at least two different tower segments for a tower, preferably a tower (102) of a wind turbine (100), the method comprising:
- producing a first concrete formwork (500) by a method as claimed in at least one of the preceding claims;
- providing a second pattern of a second component, which is different from the first;
- erecting the production formwork, previously used for the production of the first concrete formwork (500), around the second pattern at a distance from the second pattern, wherein a cavity produced between the production formwork and the second pattern corresponds to the dimensions of the second concrete formwork to be produced;
- filling the cavity with liquid concrete;
- hardening the concrete.

8. A method for producing a component (800), in particular a tower segment for a tower, preferably a tower (102) of a wind turbine (100), the method comprising:
- providing a concrete formwork (500) produced by the method as claimed in at least one of the preceding claims;
- filling a cavity formed by the concrete formwork (500) with liquid concrete;
- hardening the concrete.

9. The method for producing a component (800) as claimed in the preceding claim, **characterized by**:
- removing the concrete formwork (500); and/or
- reinforcing the cavity with a reinforcement; and/or
- introducing guides for tensioning wires and/or lines and/or cables into the cavity; and/or
- finishing, in particular grinding and/or coating, the component (800).

10. A use of a concrete formwork (500) for producing a component (800), namely a tower segment for a tower (102) of a wind turbine (100), **characterized in that** the concrete formwork (500) was produced in a method as claimed in at least one of the preceding claims 1-6.

## Revendications

1. Procédé pour produire un coffrage en béton (500) pour un composant (800), en particulier un segment de tour pour une tour, de préférence une tour (102) d'une éolienne (100),
le procédé comprenant
- la fourniture d'un modèle (200) du composant,
- l'érection d'un coffrage de fabrication (300) autour du modèle à une distance par rapport au modèle, dans lequel un espace creux (401, 402) apparaissant entre le coffrage de fabrication et le modèle correspond aux dimensions du coffrage en béton (500) à produire ;
- le remplissage de l'espace creux avec du béton liquide ;
- le durcissement du béton,
**caractérisé par** :
- la séparation du coffrage en béton (500) en deux ou plusieurs coffrages en béton partiels.

2. Procédé pour produire un coffrage en béton (500) pour un composant (800) selon la revendication précédente,
**caractérisé par** :
- le retrait du coffrage de fabrication (300) ;
- le retrait du modèle (200).

3. Procédé pour produire un coffrage en béton (500) pour un composant (800) selon au moins l'une quelconque des revendications précédentes,
**caractérisé par** :
- le revêtement des surfaces tournées lors de la production du coffrage en béton (500) vers le modèle avec un revêtement antiadhésif ; et/ou
- le revêtement des surfaces tournées lors de la production du coffrage en béton (500) vers le modèle avec un revêtement de couche d'apprêt et ensuite avec un revêtement antiadhésif, et/ou
- l'armature de l'espace creux (401, 402) avec une armature et/ou
- l'introduction de moyens auxiliaires pour l'utilisation et/ou le transport du coffrage en béton (500) à produire.

4. Procédé pour produire un coffrage en béton (500) pour un composant (800) selon au moins l'une quelconque des revendications précédentes,
**caractérisé en ce que**
- les dimensions du modèle (200) sont agrandies par rapport au composant (800) à produire avec le coffrage en béton (500) d'une mesure de retrait du béton ; et/ou
- les dimensions du modèle (200) par rapport au composant (800) à produire avec le coffrage en béton (500) sont agrandies d'une mesure qui prend en considération des mesures de retrait du béton aussi bien du coffrage en béton (500) que du composant (800) à produire avec le coffrage en béton.

5. Procédé pour produire un coffrage en béton (500) pour un composant selon au moins l'une quelconque des revendications précédentes,
**caractérisé en ce que**
le coffrage en béton (500) comporte deux sections, en particulier une section intérieure et une section extérieure qui peuvent être fabriquées simultanément ou l'une après l'autre.

6. Procédé pour produire un coffrage en béton (500) pour un composant selon au moins l'une quelconque des revendications précédentes,
**caractérisé en ce que**
- le coffrage de fabrication (300) est réalisé comme coffrage en béton et/ou coffrage vertical et/ou coffrage en bois et/ou coffrage porteur et/ou coffrage de cadre et/ou coffrage perdu et/ou coffrage aligné d'un seul côté et/ou coffrage aligné de deux côtés et/ou coffrage à formage libre et/ou coffrage rond ; et/ou
- le coffrage de fabrication (300) présente des dimensions qui sont appropriées au transport routier.

7. Procédé pour produire au moins deux coffrages en béton (500) différents pour au moins deux composants différents, en particulier au moins deux segments de tour différents pour une tour, de préférence une tour (102) d'une éolienne (100), le procédé comprenant :
- la production d'un premier coffrage en béton (500) selon un procédé selon au moins l'une quelconque des revendications précédentes,
- la fourniture d'un deuxième modèle d'un deuxième composant qui est différent du premier,
- l'érection du coffrage de fabrication utilisé précédemment pour la production du premier coffrage en béton (500) autour du deuxième modèle à une distance par rapport au deuxième modèle, dans lequel un espace creux apparaissant entre le coffrage de fabrication et le deuxième modèle aux dimensions du deuxième coffrage en béton à produire ;
- le remplissage de l'espace creux avec du béton liquide ;
- le durcissement du béton.

8. Procédé pour produire un composant (800), en particulier d'un segment de tour pour une tour, de préférence une tour (102) d'une éolienne (100), le procédé comprenant
- la fourniture d'un coffrage en béton (500) produit selon le procédé selon au moins l'une quelconque des revendications précédentes,
- le remplissage d'un espace creux formé par le coffrage en béton (500) avec du béton liquide ;
- le durcissement du béton.

9. Procédé pour produire un composant (800) selon la revendication précédente,
**caractérisé par** :
- le retrait du coffrage en béton (500) ; et/ou
- l'armature de l'espace creux avec une armature ; et/ou
- l'introduction de guidages pour des câbles de serrage et/ou des conduites et/ou des câbles dans l'espace creux ; et/ou
- le traitement ultérieur, en particulier le meulage et/ou le revêtement, du composant (800).

10. Utilisation d'un coffrage en béton (500) pour produire un composant (800), à savoir un segment de tour pour une tour (102) d'une éolienne (100), **caractérisée en ce que** le coffrage en béton (500) a été produit dans un procédé selon au moins l'une quelconque des revendications précédentes 1 à 6.
